# EUROPÄISCHE PATENTANMELDUNG

(11) **EP 4 818 980 A1**
(43) Veröffentlichungstag der Anmeldung: **07.10.2026**
(21) Anmeldenummer: 26169949.0
(22) Anmeldetag: 31.03.2026
(51) Int. Cl.: G06N 3/09, G01M 5/00, G06N 3/045, G06N 3/084, G06N 3/096, G06N 3/0464, G06N 5/045, G06T 7/00, G06V 10/12, G06N 3/0455

(54) **VERFAHREN ZUM AUFMERKSAMKEITSGESTEUERTEN TRAINING VON COMPUTERIMPLEMENTIERTEN NEURONALEN NETZEN MITTELS DOMÄNENWISSEN**

(30) Priorität: 04.04.2025 DE 102025113325
(71) Anmelder: Deutsches Zentrum für Luft- und Raumfahrt e.V., 53227 Bonn (DE)
(72) Erfinder: Meching, David, 51147 Köln (DE); Talies, Jesco, 51147 Köln (DE); Breitbarth, Eric, 51147 Köln (DE)
(74) Vertreter: dompatent

(57) **Zusammenfassung**

Die vorliegende Erfindung betrifft ein computerimplementiertes aufmerksamkeitsgesteuertes Trainingsverfahren zum Erhalt eines trainierten neuronalen Netzes für die Schädigungserkennung und/oder für die Erkennung mindestens eines Bereichs einer Rissspitze in einer Abbildung eines zu untersuchenden Körpers, ein computerimplementiertes Verfahren für die Schädigungserkennung in Bilddaten eines zu untersuchenden Körpers und dessen Verwendung, ein Prüfsystem, ein Computerprogrammprodukt sowie ein computerlesbares Speichermedium. Hierbei umfasst das Trainingsverfahren die Einbindung von Domänenwisssen zur Steuerung der Aufmerksamkeit während des Trainings.

## Beschreibung

Die vorliegende Erfindung betrifft ein computerimplementiertes aufmerksamkeitsgesteuertes Trainingsverfahren zum Erhalt eines trainierten neuronalen Netzes für die Schädigungserkennung und/oder für die Erkennung mindestens eines Bereichs einer Rissspitze in einer Abbildung eines zu untersuchenden Körpers, ein computerimplementiertes Verfahren für die Schädigungserkennung in Bilddaten eines zu untersuchenden Körpers und dessen Verwendung, ein Prüfsystem, ein Computerprogrammprodukt sowie ein computerlesbares Speichermedium.

Eine hinreichend genaue Erkennung und Verfolgung von Defekten, Schädigung und Rissen in Bauteilen und generell in zu untersuchenden Körpern ist ein essenzieller Bestandteil bei der Inspektion und Überwachung aller zu untersuchenden Körper, wie insbesondere struktureller Bauteile und Komponenten, die nicht konstanten, sondern vielmehr dynamischen und wechselnden Lasten während ihres Betriebes ausgesetzt sind. Ermüdung(-srissfortschritt) ist in diversen technischen Bereichen der relevanteste Schadensfall.

Bei werkstoffmechanischen Versuchen zur Charakterisierung von Rissen (z.B. Threshold, Rissfortschritt, Bruchzähigkeiten, Risswiderstandskurven) müssen diese in ihrer Länge und Orientierung sehr genau erfasst werden. Solche Versuche finden auf Coupon-Ebene (ca. 1 - 1000 mm Größe) mittels eines spezifizierten Prüfkörpers bis zur Prüfung von ganzen Bauteilstrukturen wie Flugzeugstrukturen statt. Vor allem bei Laborversuchen an metallischen Proben bzw. Prüfkörpern existieren verschiedene Arten von etablierten Risslängenmessverfahren, beispielsweise die Potentialrisslängenmessung oder die Compliance-Methode.

Nachteilig an den vorbezeichneten, aus dem Stand der Technik bekannten, Verfahren ist zunächst, dass die Wertschöpfung aktueller Rissfortschrittsversuche im Verhältnis zu dem Versuchsaufwand relativ klein ist, da häufig eine einzelne Kurve generiert wird, welche beispielsweise die Abhängigkeit einer Risslänge von der Anzahl an zyklischen aufgeprägten Belastungen bzw. der sogenannten Schwingspielanzahl für eine definierte Prüfkörpergeometrie wiedergibt. Eine Übertragung dieser Versuche auf der Ebene eines Prüfkörpers auf die Ebene einer gesamten Bauteilstruktur ist lediglich sehr begrenzt für Teilbereiche einer Bauteilstruktur oder überhaupt nicht möglich.

Aus dem Stand der Technik sind bereits computerimplementierte aufmerksamkeitsgesteuerte Trainingsverfahren für neuronale Netze bekannt geworden. Insbesondere bei der Verwendung von konvolutionalen neuronalen Netzen (CNN) zur Auswertung von experimentellen Daten kann basierend auf der Anwendung von Erklärbarkeitsmethoden eine Auswahl von künstlicher Intelligenz (KI)-Modellen mit einem bevorzugten Aufmerksamkeitsmuster erfolgen. Nachteilig hierbei ist allerdings, dass diese Auswahl manuell durch einen Experten getroffen werden muss.

Ein weiterer Nachteil des Standes der Technik liegt darin, dass zunächst eine Vielzahl an KI-Modellen trainiert und ausgewertet werden muss, bevor eine Auswahl durch einen Experten manuell getroffen werden kann. Weiterhin ist nachteilig am Stand der Technik, dass es an einer automatischen Steuerung des Aufmerksamkeitsverhaltens durch Expertenwissen während des Trainings fehlt. Eine grundlegende Herausforderung hierbei stellen verrauschte und/oder fehlerhafte Messdaten dar, so dass die KI-Modelle oftmals nachtrainiert werden müssen.

Insbesondere für konvolutionale neuronale Netze zur Klassifikation von Bildern ist eine Vielzahl an Aufmerksamkeits-Methoden verfügbar, die meist ausschließlich für Klassifikationsaufgaben implementiert sind, so dass die Wahl einer korrekten und modelltreuen Methode eine tiefgehende und objektive Auswertung erfordert, um menschlichen Vorurteilen in der Auswahl der Methode möglichst vorzubeugen. Allerdings ist ein weiterer Nachteil des Standes der Technik, dass sich vorhandenes Expertenwissen bisher, wenn überhaupt, nur aufwändig in das Training von neuronalen Netzen integrieren lässt und einen hohen personellen Aufwand sowie ggf. fundamentale Änderungen an der Modellarchitektur erfordern.

Ausgehend von den vorbezeichneten Nachteilen des Standes der Technik stellt sich die vorliegende Erfindung die Aufgabe, ein verbessertes computerimplementiertes aufmerksamkeitsgesteuertes Trainingsverfahren zum Erhalt eines neuronalen Netzes für die Schädigungserkennung und/oder für die Erkennung mindestens eines Bereichs einer Rissspitze in einer Abbildung eines zu untersuchenden Körpers, ein computerimplementiertes Verfahren für die Schädigungserkennung in Bilddaten eines zu untersuchenden Körpers und dessen Verwendung, ein Prüfsystem, ein Computerprogrammprodukt sowie ein computerlesbares Speichermedium bereitzustellen, wobei durch Expertenwissen favorisierte Aufmerksamkeitsmuster direkt in das Trainingsverfahren eines konvolutionalen neuronalen Netzes integriert sind.

Die vorbezeichnete Aufgabe wird erfindungsgemäß gelöst gemäß einem ersten Aspekt durch ein computerimplementiertes aufmerksamkeitsgesteuertes Trainingsverfahren zum Erhalt eines trainierten neuronalen Netzes, gemäß einem zweiten Aspekt durch ein computerimplementiertes Verfahren für die Schädigungserkennung in Bilddaten eines zu untersuchenden Körpers, gemäß einem dritten Aspekt mit einem Prüfsystem, gemäß einem vierten Aspekt mit einem Computerprogrammprodukt, gemäß einem fünften Aspekt mit einem computerlesbaren Speichermedium sowie gemäß einem sechsten Aspekt der Verwendung eines Verfahrens nach einem zweiten Aspekt der vorliegenden Erfindung.

Gemäß dem ersten Aspekt der Erfindung wird ein computerimplementiertes aufmerksamkeitsgesteuertes Trainingsverfahren zum Erhalt eines trainierten neuronalen Netzes bereitgestellt, insbesondere für die Schädigungserkennung und/oder für die Erkennung mindestens eines Bereiches einer Rissspitze in einer Abbildung eines zu untersuchenden Körpers, umfassend die Schritte:
a) Initialisieren eines untrainierten neuronalen Netzes mit zufälligen Gewichten;
b) Bereitstellen von Trainingsdaten für das Training des neuronalen Netzes;
c) Berechnen der aufgabenspezifischen Verlustfunktion L_{Task} des untrainierten neuronalen Netzes aus Schritt a), über die Formel: ${L}_{Task} = {L}_{Dice} = Dice \left(Y{, Y}_{G}\right) = \frac{2 \left|Y∩{Y}_{G}\right|}{\left|Y\right| + \left|{Y}_{G}\right|}$ (1) mit Y als Modelvorhersage und Y_{G} dem entsprechenden Ziel;
d) Optimieren der Gewichte des neuronalen Netzes aus Schritt a) mittels eines "Backpropagation"-Algorithmus unter Nutzung der Verlustfunktion L_{Task} zum Erhalt eines vortrainierten neuronalen Netzes über die Anzahl von k₁ Iterationen;
e) Berechnen von unterschiedlichen Erklärbarkeitsmethoden für das vortrainierte neuronale Netz aus Schritt d) und Auswählen der besten Erklärbarkeitsmethode basierend auf einem vorher festgelegten Satz objektiver Kriterien, welche für den speziellen Anwendungsfall von Relevanz sind;
f) Berechnen einer augmentierten Gesamtverlustfunktion L_{AGT} mit einer gewichteten Domänenverlustfunktion L_{Dom} über die Formel: ${L}_{AGT} = {L}_{Task} + λ ⋅ {L}_{Dom}$ (2) wobei ${L}_{Dom} = {L}_{CSI} = CSI \left(E{, E}_{G}\right) = \frac{E ⋅ {E}_{G}}{\left‖E\right‖ \left‖{E}_{G}\right‖}$ (3) mit E als berechnete Werte der Aufmerksamkeitskarte der ausgewählten Erklärbarkeitsmethode und E_{G} als Werte der Zielaufmerksamkeit berechnet über das Domänenwissen und *λ* als Gewichtungsfaktor.
g) Optimieren der Gewichte des vortrainierten neuronalen Netzes aus Schritt d) mittels eines "Backpropagation"-Algorithmus unter Nutzung der augmentierten Gesamtverlustfunktion L_{AGT} zum Erhalt eines trainierten neuronalen Netzes für die Schädigungserkennung über die Anzahl von k₂ Iterationen und Speichern der Gewichte des neuronalen Netzes über die Anzahl der k₂ Iterationen; und
h) Festlegen der Gewichte des neuronalen Netzes aus der Iteration mit dem geringsten Validierungsverlust *L_{AGT}* über die Anzahl der k₂ Iterationen.

Als Trainingsdaten für das Training des neuronalen Netzes in Verfahrensschritt b) werden insbesondere Eingabedaten und Zieldaten verwendet. Vorzugsweise werden als Eingabedaten pixelbasierte Abbildungen eines zu untersuchenden Körpers mit vorliegender Schädigung verwendet, insbesondere in Form mindestens eines Risses, und in Form eines Eingabenetzes bereitgestellt. Vorzugsweise werden als erste Zieldaten der Schädigungsbereich, beispielsweise die Pixel, welche die Rissspitze enthalten, bereitgestellt, und als zweite Zieldaten die aus dem Domänenwissen hervorgehenden theoretisch relevanten Bereiche bereitgestellt, die das Auftreten und Verhalten der Schädigung beschreiben, beispielsweise das Williams-Feld für die Rissspitze. Die ersten und zweiten Zieldaten werden insbesondere jeweils als Zielnetz bereitgestellt. Hierbei werden während des Trainings die ersten Zieldaten als Korrektur für die Vorhersagen des neuronalen Netztes genutzt und die zweiten Zieldaten durch das Domänenwissen als Korrektur für die zugrundeliegende Erklärbarkeitsmethode, insbesondere, welche Bereiche der Eingabedaten gemäß dem Domänenwissen den größten Einfluss auf die Schädigung und somit die Zieldaten haben.

Hierbei wird im Verfahrensschritt d) zunächst die Verlustfunktion L_{Task} verwendet, um das untrainierte neuronale Netz generell zu trainieren zum Erhalten eines ersten trainierten neuronalen Netzes. Vorzugsweise entspricht das erste trainierte neuronale Netz dem Ergebnis einer Vortrainingsphase, wobei in der Vortrainingsphase eine Verlustfunktion ohne Aufmerksamkeitssteuerung verwendet wird. Vorzugsweise erfolgt die Optimierung in der Vortrainingsphase in Verfahrensschritt d) für eine vordefinierte Anzahl k1 zwischen 10 und 50 Iterationen, insbesondere für eine Anzahl k1 = 30 Iterationen. Alternativ oder zusätzlich kann die Vortrainingsphase auch bis zum Erreichen eines vordefinierten Konvergenzkriteriums durchgeführt werden.

Im Rahmen der vorliegenden Erfindung wird mit dem Begriff der Erklärung bzw. Erklärbarkeit eine Aufmerksamkeitskarte bezeichnet, wobei die Aufmerksamkeitskarte dieselbe Bildgröße wie die Eingabe hat und für jeden Pixel auf dem Eingabenetz angibt, wieviel Einfluss dieser auf die Gesamtvorhersage des neuronalen Netzes hat. Als Erklärbarkeitsmethoden werden die verschiedenen Methoden bezeichnet, welche genutzt werden können, um den vorbezeichneten Einfluss zu schätzen. Als Ausgabe kann eine Aufmerksamkeitskarte beispielsweise in Form einer sogenannten Heatmap bereitgestellt werden, wobei die Heatmap für jeden Pixel auf dem Eingabenetz eines Bildes angibt, wie viel Einfluss dieser Pixel auf das Schädigungsverhalten und somit die Modelvorhersage hat.

Durch die Einfügung des Korrekturterms L_{Dom} mit dem Gewichtungsfaktor λ in der augmentierten Gesamtverlustfunktion L_{AGT} im Verfahrensschritt f), wobei vorzugsweise *λ* > 0, insbesondere *λ* ∈ ]0; 1], wird das Verhalten des neuronalen Netzes zuverlässig in Bezug auf das Domänenwissen korrigiert. In Verfahrensschritt g) wird die augmentierte Gesamtverlustfunktion L_{AGT} verwendet, um das vortrainierte neuronale Netz weiter zu trainieren zum Erhalt eines zweiten neuronalen Netzes. Vorzugsweise entspricht das zweite trainierte neuronale Netz dem Ergebnis eines zweiten Trainings unter Verwendung einer Verlustfunktion mit Aufmerksamkeitssteuerung. Vorzugsweise erfolgt die Aufmerksamkeitssteuerung durch Berechnung des Korrekturterms L_{Dom}, wobei die Berechnung von L_{Dom} die Aufmerksamkeitskarte einer Erklärbarkeitsmethode und der Zielaufmerksamkeitskarte aus dem Domänenwissen berücksichtigt.

Vorzugsweise erfolgt die Optimierung in dem zweiten Training in Verfahrensschritt g) für eine vordefinierte Anzahl k2 zwischen 200 und 1000 Iterationen, insbesondere für eine Anzahl k2 = 400 Iterationen. Alternativ oder zusätzlich kann die zweite Trainingsphase auch bis zum Erreichen eines vordefinierten Konvergenzkriteriums durchgeführt werden.

Während der Optimierung in Verfahrensschritt g) werden die optimierten Gewichte des neuronalen Netzes über die Anzahl der k2 Iterationen gespeichert, so dass ein kontinuierlicher Verlauf der Gewichte über den einzelnen Iterationsschritten verfügbar ist. Alternativ können die optimierten Gewichte des neuronalen Netzes aber auch lediglich zu einem neuen Verlustwertminimum der augmentierten Gesamtverlustfunktion L_{AGT} abgespeichert werden, so dass der Speicherbedarf reduziert werden kann.

Im Rahmen der vorliegenden Erfindung beschreibt Domänenwissen insbesondere das Fachwissen oder Expertenwissen, wobei das Domänenwissen vorzugsweise in Form von analytischen Formeln oder mathematischen Modellen bereitgestellt wird. Bevorzugt umfasst das neuronale Netz ein faltungsneuronales Netz (CNN) mit U-Netz Architektur mit mehreren Kodier- und Dekodierblöcken als Segmentierungszweig und ein vollständig verbundenes neuronales Netz (FCNN) als Regressionszweig, wobei die Dekodierblöcke mit den Kodierblöcken über einen Basisblock miteinander verbunden sind, wobei die Kodier- und Dekodierblöcke der gleichen Ebene durch eine Sprung-Verbindung (Skip) direkt miteinander verbunden sind, wobei der Regressionszweig mit dem Basisblock des Segmentierungszweiges verbunden ist. Hierbei kann das erfindungsgemäße neuronale Netz insbesondere als "ParallelNets" ausgebildet sein, welches parallel eine Segmentierung und eine Regression über entsprechende parallele Netzzweige ausführt. Im Rahmen der Erfindung wird der Begriff konvolutionales neuronales Netz synonym für faltungsneuronales Netz verwendet.

Bevorzugt umfasst das neuronale Netz ein faltungsneuronales Netz (CNN) mit mehreren Kodierblöcken und ein vollständig verbundenes neuronales Netz (FCNN) als Regressionszweig, wobei der Regressionszweig mit dem letzten Kodierblock verbunden ist.

Erfindungsgemäß handelt es sich bei dem CNN bzw. FCNN insbesondere um ein tiefes neuronales Netz, wobei CNN bzw. FCNN insbesondere für die Verarbeitung von Daten mit gitterartiger Topologie geeignet sind, wie beispielsweise Bilder.

Das erfindungsgemäße neuronale Netz sowie das Trainingsverfahren können beispielsweise über die Open-Source-Programm-Bibliothek "PyTorch" umgesetzt werden, welche eine auf maschinelles Lernen ausgerichtete Open-Source-Programm-Bibliothek unter Verwendung der Programmiersprache Python darstellt.

Die Optimierung des vorbezeichneten neuronalen Netzes in der beschriebenen Netzarchitektur und unter Nutzung des vorbeschriebenen Gesamtfehlers mittels Back-Propagation-Algorithmus können beispielsweise in dem Programmpaket PyTorch über die Nutzung des sogenannten Adam-Optimierers vollzogen werden.

Bevorzugt erfolgt die Berechnung der Werte der Zielaufmerksamkeitskarte des Domänenwissens durch eine Theorie mittels analytischer Formel.

Vorzugsweise wird das Domänenwissen in Abhängigkeit des zu untersuchenden Anwendungsfall spezifiziert. Insbesondere für Untersuchungen des Rissspitzenfeldes kann beispielsweise als Domänenwissen die von-Mises-Vergleichsdehnung gewählt werden. Hierbei kann die Kenntnis über die von-Mises-Vergleichsdehnung in Form einer analytischen Formel im Trainingsverfahren berücksichtigt werden. Hieraus kann für jeden Iterationsschritt analytisch eine Zielaufmerksamkeitskarte erstellt werden und mit den Aufmerksamkeitskarten der Erklärbarkeitsmethoden verglichen werden. Somit kann der Korrekturterm L_{Dom} ermittelt werden. Über den Gewichtungsfaktor λ in der augmentierten Gesamtverlustfunktion L_{AGT} wird das Domänenwissen in das Training des neuronalen Netzes gewichtet eingebunden und kann so das Aufmerksamkeitsverhalten steuern.

Bevorzugt wird die Berechnung mittels einer analytischen Formel ausgewählt aus der Gruppe von: Kolosovscher Formel, Spannungsfunktion nach Westergaard, Williams-Reihe, Hutchinson-Rice-Rosengren (HRR) Model, Christopher-James-Patterson (CJP) Model, Inglis-Gleichung, Neuber-Kerbspannungsmodell oder Hertz'sche Theorie des elastischen Kontakts.

Vorzugsweise erfolgt die Auswahl der analytischen Formel unter Berücksichtigung des Parameterraums des neuronalen Netzes. Hierdurch wird sichergestellt, dass das Domänenwissen auch als Zielfunktion in das neuronale Netz integriert werden kann.

Der Fokus der Aufmerksamkeitskarte des Domänenwissens wird erfindungsgemäß auf Bereiche mit erhöhtem Schädigungsgeschehen, wie beispielsweise Spannungskonzentrationen, gelegt. Im Bereich der Bruchmechanik können Spannungen, Dehnungen und Verschiebungen um die Rissspitze bzw. das ebene Rissspitzenspannungsfeld beispielsweise mit Hilfe von komplexen Spannungsfunktionen wie den Kolosovschen Formeln oder der Spannungsfunktion nach Westergaard berechnet werden. Andere Beschreibungen des Rissspitzenfeldes sind insbesondere die Williams-Reihe, das Hutchinson-Rice-Rosengren (HRR) Model oder das Christopher-James-Patterson (CJP) Model. Darüber hinaus existieren analytische Lösungen zur Bestimmung von Spannungen an Kerben und Bohrungen, beispielsweise basierend auf der Inglis-Gleichung oder dem Neuber-Kerbspannungsmodell. In der Kontaktmechanik wird die Spannungsverteilung beispielsweise durch die Hertz'sche Theorie des elastischen Kontakts beschrieben, die Kontaktspannungen für verschiedene Geometrien, wie Kugel- oder Linienkontakt, erfasst. Derartige Ansätze ermöglichen eine präzise analytische Beschreibung von Spannungsfeldern, insbesondere in Bereichen mit hoher lokaler Spannungskonzentration, die maßgeblich zur Initiierung und Entwicklung von Schädigungsmechanismen beitragen.

Bevorzugt erfolgt im Verfahrensschritt e) das Auswählen der Erklärbarkeitsmethode anhand von vier objektiven Kriterien: Faithfulness/Correctness, Completeness, Continuity und Compactness.

Die systematische Bewertung von Erklärbarkeitsmethoden kann insbesondere auf Basis von einem Kriterienkatalog erfolgen. Hierbei können verschiedene Aspekte der Erklärbarkeitsmethode berücksichtigt werden. Das Kriterium der Korrektheit oder Treue (Faithfulness/Correctness) ist ein wichtiges Kriterium und ein Maß dafür, wie genau die Erklärung dem tatsächlichen Modellverhalten entspricht. Ergänzend zur Faithfulness/Correctness gibt das Kriterium der Vollständigkeit (Completeness) an, ob die Bereiche mit hoher Aufmerksamkeit tatsächlich für eine genaue Modellvorhersage ausreichen. Das Kriterium der Kontinuität (Continuity) ist ein Stabilitätsmaß, d.h. dass geringfügige Schwankungen in der Eingabe, die nur geringfügige Schwankungen in der Modellvorhersage verursachen, auch zu geringen Schwankungen in der Erklärung selbst führen sollten. Der Kompaktheit (Compactness) liegt die Annahme zugrunde, dass gute Erklärungen kurz und prägnant sind. Eine Erklärungsmethode, die einen Großteil des Eingabenetzes als signifikant erachtet, liefert nur wenig Informationen über das Modellverhalten. Die Kompaktheit (Compactness) ist ein Kriterium in Konkurrenz zur Vollständigkeit (Completeness), da eine kompakte Erklärung ggf. Informationen vernachlässigen muss, was zu einem Rückgang der Vorhersageleistung führen kann. Daher muss insbesondere bei der Bewertung und Auswahl der Erklärungsmethode das Gleichgewicht zwischen Kompaktheit und Vollständigkeit berücksichtigt und je nach den Anforderungen der jeweiligen Aufgabe gewichtet werden. Auf Basis der genannten Kriterien kann die Auswahl der Erklärbarkeitsmethode erfolgen, die im weiteren Verlauf des Trainings Anwendung findet.

Bevorzugt erfolgt die Berechnung der Aufmerksamkeitskarte der Erklärbarkeitsmethode mittels Class Activation Mapping (CAM).

CAM sind klassendiskriminierende Aufmerksamkeitskarten. Hierbei wird vorzugsweise durch Global Average Pooling (GAP) der räumliche Durchschnitt der Merkmalskarte jeder Klasse in der letzten Faltungsschicht ausgegeben. Vorzugsweise wird eine gewichtete Summe dieser Werte verwendet, um die endgültige Ausgabe zu erzeugen. In entsprechender Weise wird eine gewichtete Summe der Merkmalskarten der letzten Faltungsschicht berechnet, um die Klassenaktivierungskarten zu erhalten. Vorzugsweise ist die Bestimmung der Klassenaktivierungskarten jedoch nicht auf eine lineare Gewichtung der Merkmalskarten und GAP beschränkt. Bevorzugt erfolgt die Berechnung der Werte der Klassifikationskarte der Erklärbarkeitsmethode mittels einer CAM-Variante ausgewählt aus der Gruppe von: Grad-CAM, Grad-CAM++, Layer-CAM, Score-CAM, Eigen-CAM oder Ablation-CAM.

Zur Bestimmung der Klassenaktivierungskarte können weitere CAM-Varianten angewendet werden. Diese umfassen beispielsweise Gradienten basierte Varianten erster (Grad-CAM) oder zweiter Ordnung (CAM-Grad++), wobei die Gradienten in der letzten Faltungsschicht anstelle der festen Gewichte verwendet werden. Diese Variante heben hervor, wie stark Änderungen der Eingabe das Modell beeinflussen. Werden Merkmalskarten aus mehreren Schichten verwendet anstelle der letzten Faltungsschicht, kann die Variante Layer-CAM angewendet werden, wobei insbesondere granulare Details aus mehreren Schichten ggf. eine genauere Analyse ermöglichen. Score-CAM basiert auf mehreren Berechnungen, wobei durch modifizierte Eingaben die relevanten Regionen identifiziert werden. Hierbei werden in den einzelnen Berechnungen Klassifikationswahrscheinlichkeiten ermittelt, wenn einzelne Merkmalskarten aktiviert oder deaktiviert werden. Die Variante Eigen-CAM berechnet die Eigenvektoren der Aktivierungen der letzten Faltungsschicht. Ablation-CAM basiert ebenfalls auf mehreren Berechnungen, wobei der Einfluss einzelner Neuronen in der letzten Faltungsschicht durch Aktivierung und Deaktivierung der einzelnen Neuronen bestimmt wird. Somit können je nach Anwendungsfall und Rechenkapazität die entsprechende Variante ausgewählt werden.

Gemäß einem zweiten Aspekt der Erfindung wird erfindungsgemäß ein computerimplementiertes Verfahren für die Schädigungserkennung in Bilddaten eines zu untersuchenden Körpers bereitgestellt, umfassend die Schritte:
a) Generieren mindestens einer ersten makroskopischen Referenzaufnahme mittels einer ersten ortsfesten Bildaufnahmeeinrichtung und einer Mehrzahl von mikroskopischen Referenzaufnahmen mittels einer zweiten positionierbaren Bildaufnahmeeinrichtung mindestens einer zu untersuchenden Oberfläche des unbelasteten zu untersuchenden Körpers;
b) Aufprägen einer Last oder eines Lastregimes auf den Körper;
c) Generieren mindestens einer makroskopischen Aufnahme der mindestens einen zu untersuchenden Oberfläche des Körpers unter anliegender Last gemäß Verfahrensschritt b) und/oder nach Entlastung über die erste ortsfeste Bildaufnahmeeinrichtung;
d) Berechnen der aktuellen Lokalisierung mindestens eines Schädigungsbereiches und/oder mindestens eines Bereiches einer Rissspitze im Körper unter Verwendung eines trainierten neuronalen Netzwerkes für die Schädigungserkennung nach einem ersten Aspekt der vorliegenden Erfindung;
e) Ausrichten der zweiten positionierbaren Bildaufnahmeeinrichtung anhand des mindestens einen Schädigungsbereichs des Körpers und/oder des mindestens einen Bereichs einer Rissspitze im Körper gemäß Verfahrensschritt c) und Generieren mindestens einer mikroskopischen Aufnahme des mindestens einen Schädigungsbereichs mittels der zweiten Bildaufnahmeeinrichtung unter anliegender Last gemäß Verfahrensschritt b) und/oder nach Entlastung; und
f) Optionales Wiederholen der Verfahrensschritte b) bis e) um eine beliebige ganzzahlige Anzahl an Wiederholungen, wobei im Verfahrensschritt b) eine von der zuvor aufgeprägten Last abweichende Last oder ein abweichendes Lastregime aufgeprägt wird.

Optional können in dem erfindungsgemäßen Verfahren die Verfahrensschritte b) - e) um eine beliebige ganzzahlige Anzahl wiederholt werden, wobei im Verfahrensschritt b) eine von der zuvor aufgeprägten Last abweichende Last oder ein abweichendes Lastregime aufgeprägt bzw. auf den zu untersuchenden Körper eingeprägt wird.

Bei dem Verfahren zur Schädigungserkennung kann es sich insbesondere um ein Verfahren zur Erkennung des Schädigungsfortschrittes in einem Körper, wie u.a. um ein Verfahren zur Rissfortschrittserkennung in dem Körper, handeln. Als Schädigung soll im Rahmen der vorliegenden Erfindung nicht lediglich die Entstehung eines Risses in dem Körper und Ausbreitung bzw. Rissfortschrittsverlängerung in einem Bauteil bzw. Körper verstanden werden, sondern jegliches nicht reversibles Schädigungsverhalten innerhalb eines Körpers.

Bei dem zu überprüfenden Körper kann es sich beispielsweise um einen rissbehafteten Prüfkörper handeln, es kann sich anderenfalls bei dem Körper jedoch auch um ein Bauteil handeln, dessen Schädigungsverhalten unter veränderlichen Lastbedingungen und über gewisse Zeiträume beobachtet werden soll, wobei beispielsweise noch kein Riss innerhalb des Bauteils aufgetreten sein muss bzw. vorliegt. Es kann sich beispielsweise bei dem zu überprüfenden Körper um ein Bauteil eines boden-, luft- oder seegebundenen Fahrzeuges handeln.

Bei dem mindestens einen Schädigungsbereich kann es sich um den Bereich einer Rissspitze handeln. Es kann sich bei dem Schädigungsbereich jedoch anderenfalls auch um den Bereich in einem Körper handeln, worin beispielsweise eine Plastifizierung des Materials auftritt.

Bei der Mehrzahl der in Verfahrensschritt a) generierten mikroskopischen Aufnahmen kann es sich beispielsweise um aneinander angrenzende bzw. einander zumindest abschnittsweise bzw. teilweise überlappende Aufnahmen der gesamten mindestens einen zu untersuchenden Oberfläche des zu überprüfenden Körpers handeln.

Die über die zweite positionierbare Aufnahmeeinrichtung generierten Aufnahmen weisen eine höhere Vergrößerung im Vergleich zu den Aufnahmen der ersten ortsfesten Aufnahmeeinrichtung auf. Für die Generierung eines Bildes des gesamten Flächenbereichs der zu untersuchenden mindestens einen Oberfläche ist es erforderlich, eine Mehrzahl an Einzelaufnahmen von Teilbereichen der zu untersuchenden Oberfläche zu generieren, welche aneinander angrenzen bzw. einander zumindest teilweise überlappen und nachfolgend mittels Bildverarbeitungsverfahren durch Assemblierung der Einzelaufnahmen zu einem Gesamtbild der zu untersuchenden Oberfläche zusammengeführt werden können. Dabei werden aus der Mehrzahl von mikroskopischen Einzelaufnahmen beispielsweise ein assembliertes Gesamtbild der Oberfläche mit einer höheren Auflösung als das Bild der makroskopischen ersten Bildaufnahmeeinrichtung generiert.

Zur Erstellung der Vielzahl bzw. Mehrzahl von mikroskopischen Einzelaufnahmen wird die zweite mikroskopische Bildaufnahmeeinrichtung über die zu untersuchende Oberfläche verfahren bzw. verschoben oder zumindest die Winkellage der mikroskopischen Bildaufnahmeeinrichtung im dreidimensionalen Raum verändert, so dass eine Rasterung der Oberfläche mittels der zweiten positionierbaren Bildaufnahmeeinrichtung erfolgt, in dem Sinn, dass die zu untersuchende Oberfläche durch Aufnahme mikroskopischer Aufnahmen von Teil- bzw. Subbereichen der gesamten zu untersuchenden Oberfläche fotografiert wird und damit durch ein Raster von mikroskopischen Aufnahmen erfasst wird.

Bei der ersten makroskopischen Bildaufnahmeeinrichtung kann es sich um ein System zur Aufnahme eines Lichtbildes eines auf der zu beobachtenden Oberfläche des zu überprüfenden Körpers aufgebrachten stochastischen Musters bzw. eines Musters mit stochastischer Verteilung handeln.

Bei der Last oder dem Lastregime im Verfahrensschritt b) kann es sich beispielsweise um vordefinierte Werte handeln, welche auf den zu überprüfenden Körper aufgebracht werden sollen, beispielsweise kann erfindungsgemäß eine definierte Last bzw. ein definierter Lastzustand auf den zu untersuchenden Körper aufgebracht und damit eingebracht werden. Es kann sich jedoch auch alternativ um Lasten handeln, welche auf den zu überprüfenden Körper während einer spezifischen Nutzungsdauer einwirken, die Last oder das Lastregime können erfindungsgemäß auf dem zu überprüfenden Körper beispielsweise mittels einer Prüfmaschine, wie beispielsweise mit einer servohydraulisch angetriebenen Prüfmaschine, eingebracht werden.

Bevorzugt kann es vorgesehen werden, dass das Verfahren vor dem Verfahrensschritt b) weiterhin den Schritt umfasst:
a1) Kalibrieren der Positionierung der zweiten Bildaufnahmeeinrichtung durch Abgleichen der aktuellen Raumlage der zweiten Bildaufnahmeeinrichtung gegenüber der ersten ortsfesten Bildaufnahmeeinrichtung.

Der erfindungsgemäß verwendete Begriff "ortsfest" im Hinblick auf die erste Bildaufnahmeeinrichtung soll erfindungsgemäß dahingehend verstanden werden, dass die Positionierung der ersten Bildaufnahmeeinrichtung im dreidimensionalen Raum zumindest in Relation zu dem zu untersuchenden Körper festgelegt und unveränderlich ist. Im Gegensatz dazu ist die zweite Bildaufnahmeeinrichtung im dreidimensionalen Raum frei positionierbar ausgestaltet, erfindungsgemäß kann die zweite Bildaufnahmeeinrichtung mittels einer Positionierungseinrichtung, wie insbesondere einem Roboterarm, frei im dreidimensionalen Raum gegenüber dem zu untersuchenden Körper ausgerichtet angeordnet bzw. verschwenkt und/oder verfahren werden.

Die zweite Bildaufnahmeeinrichtung weist jedoch bei der Generierung einer spezifischen mikroskopischen Einzelaufnahme eine definierte Lage und Position im dreidimensionalen Raum auf. Erfindungsgemäß kann es jedoch auch vorgesehen sein, die zweite mikroskopische Bildaufnahmeeinrichtung mittels der Positioniervorrichtung kontinuierlich über den Bereich der zu untersuchenden Oberfläche des zu untersuchenden Körpers zu verfahren und dabei sequentiell eine Vielzahl von Einzelbildern oder kontinuierlich beispielsweise eine Videosequenz und damit Abfolge von Einzelbildern zu generieren.

Bevorzugt kann es weiterhin vorgesehen werden, dass im Verfahrensschritt a) mindestens eine makroskopische Referenzaufnahme der gesamten Oberfläche des unbelasteten zu untersuchenden Körpers mittels einer ersten ortsfesten Bildaufnahmeeinrichtung und/oder einer Mehrzahl von mikroskopischen Referenzaufnahmen der gesamten Oberfläche des unbelasteten zu untersuchenden Körpers mittels einer zweiten positionierbaren Bildaufnahmeeinrichtung generiert werden.

Bevorzugt kann es weiterhin vorgesehen werden, dass der Verfahrensschritt e) zusätzlich den Schritt umfasst:
e1) optisches Fokussieren der zweiten Bildaufnahmeeinrichtung auf den Bereich der Schädigung bzw. der Rissspitze.

Bevorzugt handelt es sich bei den Bilddaten der ersten und zweiten Bildaufnahmeeinrichtung um Bildkorrelation in zwei oder drei Dimensionen.

Aus dem Vergleich der generierten makroskopischen bzw. mikroskopischen Aufnahmen unter definierten Lasten im Vergleich zu den entsprechenden Referenzaufnahmen der unbelasteten Probe können mittels zwei- oder dreidimensionaler digitaler Bildkorrelation die zwei- bzw. dreidimensionalen Verschiebungsfelder auf der mindestens einen zu untersuchenden Oberfläche ermittelt werden.

Gemäß einem dritten Aspekt betrifft die vorliegende Erfindung ein Prüfsystem umfassend eine Prüfmaschine zur Aufprägung einer definierten Last oder eines Lastregimes auf einen zu untersuchenden Körper, eine ortsfeste makroskopische Bildaufnahmeeinrichtung zur Generierung von makroskopischen Aufnahmen des zu untersuchenden Körpers, eine zweite ausrichtbare mikroskopische Bildaufnahmeeinrichtung zur Generierung mindestens einer mikroskopischen Aufnahme des zu untersuchenden Körpers und ein Computersystem, das dazu ausgebildet ist, das Verfahren gemäß dem zweiten Aspekt der vorliegenden Erfindung auszuführen. Bei der mikroskopischen Bildaufnahmeeinrichtung kann es sich beispielsweise um ein Lichtmikroskop und eine daran optisch angeschlossene optische Bildaufnahmeeinrichtung, wie beispielsweise eine Industriekamera oder eine Spiegelreflexkamera, handeln.

Bei der ersten und/oder der zweiten Bildaufnahmeeinrichtung kann es sich jeweils um ein System zur digitalen Bildkorrelation in zwei oder drei Raumdimensionen handeln.

Gemäß einem vierten Aspekt der vorliegenden Erfindung betrifft diese ein Computerprogrammprodukt umfassend Befehle, die bei der Ausführung des Programms durch einen Computer diesen veranlassen, die Verfahrensschritte gemäß dem ersten und/oder zweiten Aspekt der vorliegenden Erfindung auszuführen.

Weiterhin betrifft die vorliegende Erfindung gemäß einem fünften Aspekt die Verwendung des Verfahrens gemäß dem zweiten Aspekt der vorliegenden Erfindung zur Erkennung der Schädigung und/oder für die Erkennung mindestens eines Bereiches einer Rissspitze in einem Bauteil, insbesondere ein Bauteil eines Luftfahrzeuges.

Im Folgenden werden unter Bezugnahme auf die beigefügten Figuren beispielhafte erfindungsgemäße Ausführungsformen der erfindungsgemäßen Verfahren und Vorrichtungen erläutert.

### Es zeigen:

- Fig. 1: einen schematischen Ablauf eines computerimplementierten Verfahrens für die Schädigungserkennung in Bilddaten eines zu untersuchenden Körpers gemäß einer beispielhaften Ausführungsform der vorliegenden Erfindung;
- Fig. 2: einen schematischen Ablauf des aufmerksamkeitsgesteuerten Trainings eines neuronalen Netzes gemäß einer beispielhaften Ausführungsform der vorliegenden Erfindung;
- Fig. 3: einen Vergleich einiger trainierter Modelle gemäß beispielhafter Ausführungsformen der vorliegenden Erfindung.

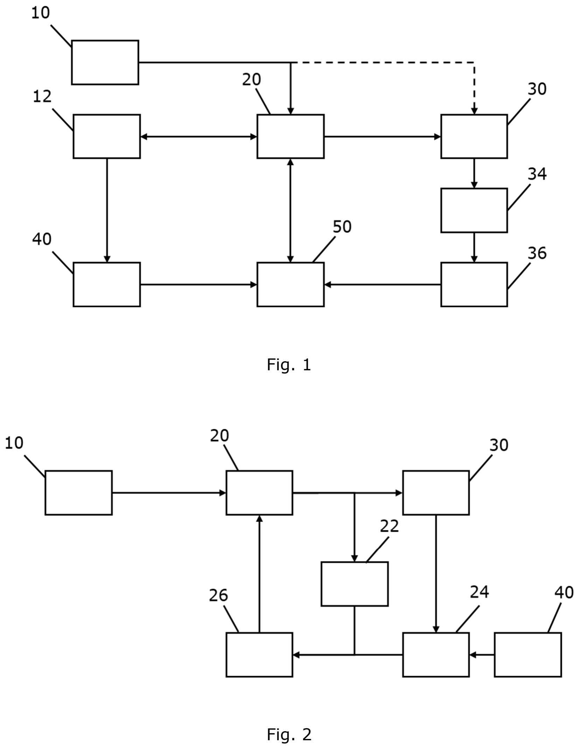

Fig. 1 zeigt in einer beispielhaften Ausführungsform der vorliegenden Erfindung einen schematischen Ablauf eines computerimplementierten Verfahrens für die Schädigungserkennung in Bilddaten eines zu untersuchenden Körpers.

Hierbei werden beispielsweise zwei- oder dreidimensionale Bilddaten 10 eines zu untersuchenden Körpers bereitgestellt. Die Bilddaten 10 sind die Eingabedaten in ein faltungsneuronales Netz 20. Vorzugsweise können die Bilddaten 10 auch für die Erklärbarkeitsmethoden 30 bereitgestellt werden. Hierdurch können insbesondere zur Visualisierung der Aufmerksamkeitskarten entsprechende Heatmaps der Erklärbarkeitsmethoden 30 über die Bilddaten 10 gelegt werden. Das faltungsneuronale Netz 20 gibt in jedem Iterationsschritt Ausgabedaten aus, beispielsweise eine Rissspitzensegmentierung 12. Zur Nachvollziehbarkeit des Modellverhalten werden nach jedem Iterationsschritt die Ausgabedaten anhand von Erklärbarkeitsmethoden 30 analysiert. Hierzu wird relevantes Domänenwissen 40 entsprechend den zu ermittelnden Ausgabedaten identifiziert und in Form von analytischen Formeln, beispielsweise das Williams-Feld für die Rissspitze, bereitgestellt. Durch einen Abgleich der Erklärungsmethoden 30 mit dem Domänenwissen 40 können die Erklärbarkeitsmethoden 30 ausgewertet werden. Die Erklärungen der Erklärbarkeitsmethoden 30 werden anhand von objektiven Kriterien 34 ausgewertet, insbesondere Faithfulness/Correctness, Completeness, Continuity und Compactness. Je nach Anwendungsfall können alternativ oder zusätzlich auch andere Kriterien verwendet werden. Anhand der objektiven Kriterien erfolgt eine Auswahl 36 der treuesten Erklärungsmethode 30 für das aufmerksamkeitsgesteuerte Training 50 des neuronalen Netzes. Diese Erklärbarkeitsmethode wird anschließend für das weitere aufmerksamkeitsgesteuerte Training 50 des neuronalen Netzes verwendet. Für das aufmerksamkeitsgesteuerte Training 50 des neuronalen Netzes wird das Domänenwissen 40 als Korrekturterm berücksichtigt in einer augmentierten Gesamtverlustfunktion. Diese augmentierte Gesamtverlustfunktion wird dann für das aufmerksamkeitsgesteuerte Training 50 des neuronalen Netzes verwendet zum Erhalt eines trainierten neuronalen Netzes insbesondere für die Schädigungserkennung und/oder für die Erkennung mindestens eines Bereiches einer Rissspitze in einer Abbildung eines zu untersuchenden Körpers.

Fig. 2 zeigt einen schematischen Ablauf des aufmerksamkeitsgesteuerten Trainings eines faltungsneuronalen Netzes 20 gemäß einer beispielhaften Ausführungsform der vorliegenden Erfindung. Die Eingabedaten, beispielsweise zwei- oder dreidimensionale Bilddaten 10 eines zu untersuchenden Körpers, werden als Eingabedaten für das untrainierte faltungsneuronale Netz 20 bereitgestellt. Hierbei handelt es sich für das Training des faltungsneuronalen Netzes 20 um Trainingsdaten. Nach jeder Iteration wird die Verlustfunktion L_{Task} 22 ohne Aufmerksamkeitssteuerung berechnet, wobei die Verlustfunktion L_{Task} 22 beispielsweise einem Dice-Koeffizient L_{Dice} entspricht. Für das Training des faltungsneuronalen Netzes werden entsprechende Trainingsdaten mit ersten und zweiten Zieldaten bereitgestellt, so dass die Berechnung der Verlustfunktion 22 anhand der ersten Zieldaten, insbesondere von Schädigungsbereichen, beispielsweise die Pixel, welche die Rissspitze enthalten, erfolgen kann. In einer ersten Trainingsphase wird das faltungsneuronale Netz 20 mit der Verlustfunktion 22 vortrainiert, vorzugsweise bis eine vordefinierte Anzahl von Iteration, beispielsweise 30 Iterationen, und/oder ein Konvergenzkriterium der Optimierung erreicht wird. Während der ersten Trainingsphase wird nach jedem Iterationsschritt das Modellverhalten des faltungsneuronalen Netzes 20 mit Erklärbarkeitsmethoden 30 ausgewertet. Hierbei können die Eingabedaten vorzugsweise strategisch maskiert werden, beispielsweise durch Nullsetzen einzelner Pixel oder Verrauschen einzelner Pixelwerte oder Blurring, um eine objektive und unabhängige Einschätzung der Erklärung zu ermöglichen. Nach Abschluss der Vortrainingsphase können die Erklärbarkeitsmethoden anhand von objektiven Kriterien analysiert werden, insbesondere Faithfulness/Correctness, Completeness, Continuity und Compactness. Hierbei werden die Erklärungen der Erklärbarkeitsmethode mit Domänenwissen 40 abgeglichen. Das Domänenwissen 40 umfasst insbesondere analytische Formeln, welche anwendungsspezifisch das Fachwissen eines Experten repräsentieren und entspricht den zweiten Zieldaten. Für das Auftreten und Verhalten der Schädigung kann beispielsweise das Williams-Feld für die Rissspitze als Domänenwissen 40 verwendet werden. Somit kann die beste Erklärbarkeitsmethode ausgewählt werden, welche für das weitere Training des faltungsneuronalen Netzes genutzt wird.

Für das zweite Training wird der Abgleich der Erklärbarkeitsmethode 30 mit dem Domänenwissen 40 in einem Korrekturterm L_{Dom} 24 berücksichtigt. Mit dem Gewichtungsfaktor λ kann der Korrekturterm 24 mit der Verlustfunktion L_{Task} 22 addiert bzw. augmentiert werden zur augmentierten Gesamtverlustfunktion L_{AGT} 26, wobei vorzugsweise λ>0, insbesondere λ ∈ ]0;1]. Somit wird das Verhalten des faltungsneuronalen Netzes zuverlässig in Bezug auf das Domänenwissen 40 korrigiert.

Die augmentierte Gesamtverlustfunktion 26 wird in der zweiten Trainingsphase genutzt, um das faltungsneuronale Netz weiter zu optimieren zum Erhalt eines trainierten neuronalen Netzes für die Schädigungserkennung. Hierbei werden insbesondere zu jeder Iteration die Gewichte der neuronalen Netze gespeichert. Alternativ können die optimierten Gewichte des neuronalen Netzes aber auch lediglich zu einem neuen Verlustwertminimum der augmentierten Gesamtverlustfunktion L_{AGT} 26 abgespeichert werden, so dass der Speicherbedarf reduziert werden kann. Die zweite Trainingsphase erfolgt vorzugsweise, bis eine vordefinierte Anzahl von Iteration, beispielsweise 400 Iterationen, und/oder ein Konvergenzkriterium der Optimierung erreicht wird. Anschließend werden die Gewichte des faltungsneuronalen Netzes 20 aus der Iteration mit den geringsten Validierungsverlaus der augmentierten Gesamtverlustfunktion L_{AGT} 26 festgelegt. Somit wird ein trainiertes faltungsneuronales Netz, insbesondere für die Schädigungserkennung und/oder für die Erkennung mindestens eines Bereiches einer Rissspitze in einer Abbildung eines zu untersuchenden Körpers, bereitgestellt.

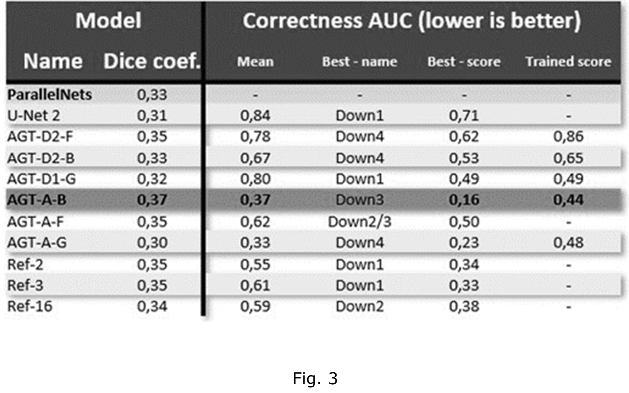

Fig. 3 zeigt einen Vergleich eines trainierten Modells gemäß einer beispielhaften Ausführungsform der vorliegenden Erfindung mit weiteren Modellen. Wie in der Tabelle der Fig. 3 gezeigt, zeigt das hervorgehobene Modell AGT A-B, wobei es sich um ein nach einer beispielhaften Ausführungsform der vorliegenden Erfindung trainiertes Modell handelt, den besten Wert für die Verlustfunktion L_{Dice}. Zugleich ergibt die Auswertung für das Kriterium Correctness einen mittleren Wert von 0,37. Das bedeutet, dass das Modell nicht nur eine sehr gute Vorhersage trifft, sondern, bedingt durch das erfindungsgemäße Trainingsverfahren, auch die korrekte Erklärung findet, so dass dieses Modell ein hohes Maß an Generalisierung ermöglicht.

## Patentansprüche

1. Computerimplementiertes aufmerksamkeitsgesteuertes Trainingsverfahren zum Erhalt eines trainierten neuronalen Netzes für die Schädigungserkennung und/oder für die Erkennung mindestens eines Bereiches einer Rissspitze in einer Abbildung eines zu untersuchenden Körpers, umfassend die Schritte:
a) Initialisieren eines untrainierten neuronalen Netzes mit zufälligen Gewichten;
b) Bereitstellen von Trainingsdaten für das Training des neuronalen Netzes;
c) Berechnen der aufgabenspezifischen Verlustfunktion L_{Task} des untrainierten neuronalen Netzes aus Schritt a); ), über die Formel: ${L}_{Task} = {L}_{Dice} = Dice \left(Y{, Y}_{G}\right) = \frac{2 \left|Y∩{Y}_{G}\right|}{\left|Y\right| + \left|{Y}_{G}\right|}$ (1) mit Y als Modelvorhersage und Y_{G} dem entsprechenden Ziel;
d) Optimieren der Gewichte des neuronalen Netzes aus Schritt a) mittels eines "Backpropagation"-Algorithmus unter Nutzung der Verlustfunktion L_{Task} zum Erhalt eines vortrainierten neuronalen Netzes über die Anzahl von k₁ Iterationen;
e) Berechnen von unterschiedlichen Erklärbarkeitsmethoden für das vortrainierte neuronale Netz aus Schritt d) und Auswählen der besten Erklärbarkeitsmethode basierend auf einem vorher festgelegten Satz objektiver Kriterien, welche für den speziellen Anwendungsfall von Relevanz sind;
f) Berechnen einer augmentierten Gesamtverlustfunktion L_{AGT} mit einer gewichteten Domänenverlustfunktion L_{Dom} über die Formel: ${L}_{AGT} = {L}_{Task} + λ ⋅ {L}_{Dom}$ (2) wobei ${L}_{Dom} = {L}_{CSI} = CSI \left(E{, E}_{G}\right) = \frac{E ⋅ {E}_{G}}{\left‖E\right‖ \left‖{E}_{G}\right‖}$ (3) mit E als berechnete Werte der Aufmerksamkeitskarte der ausgewählten Erklärbarkeitsmethode und E_{G} als Werte der Zielaufmerksamkeit berechnet über das Domänenwissen und λ als Gewichtungsfaktor.
g) Optimieren der Gewichte des vortrainierten neuronalen Netzes aus Schritt d) mittels eines "Backpropagation"-Algorithmus unter Nutzung der augmentierten Gesamtverlustfunktion *L_{AGT}* zum Erhalt eines trainierten neuronalen Netzes für die Schädigungserkennung über die Anzahl von k₂ Iterationen und Speichern der Gewichte des neuronalen Netzes über die Anzahl der k₂ Iterationen; und
h) Festlegen der Gewichte des neuronalen Netzes aus der Iteration mit dem geringsten Validierungsverlust *L_{AGT}* über die Anzahl der k₂ Iterationen.

2. Trainingsverfahren nach Anspruch 1, wobei das neuronale Netz umfasst:
- ein faltungsneuronales Netz (CNN) mit U-Netz Architektur mit mehreren Kodier- und Dekodierblöcken als Segmentierungszweig; und
- ein vollständig verbundenes neuronales Netz (FCNN) als Regressionszweig; wobei die Dekodierblöcke mit den Kodierblöcken über einen Basisblock miteinander verbunden sind, wobei die Kodier- und Dekodierblöcke der gleichen Ebene durch eine "Skip"/Sprung-Verbindung direkt miteinander verbunden sind,
wobei der Regressionszweig mit dem Basisblock des Segmentierungszweiges verbunden ist.

3. Trainingsverfahren nach Anspruch 1, wobei das neuronale Netz umfasst:
- ein faltungsneuronales Netz (CNN) mit mehreren Kodierblöcken und ein vollständig verbundenes neuronales Netz (FCNN) als Regressionszweig, wobei der Regressionszweig mit dem letzten Kodierblock verbunden ist.

4. Trainingsverfahren nach einem der Ansprüche 1 bis 3, wobei die Berechnung der Werte der Target-Heatmap des Domänenwissens durch eine Theorie mittels analytischer Formel erfolgt.

5. Trainingsverfahren nach Anspruch 4, wobei die Berechnung mittels einer analytischen Formel ausgewählt aus der Gruppe von: Kolosovscher Formel, Spannungsfunktion nach Westergaard, Williams-Reihe, Hutchinson-Rice-Rosengren (HRR) Model, Christopher-James-Patterson (CJP) Model, Inglis-Gleichung, Neuber-Kerbspannungsmodell oder Hertz'sche Theorie des elastischen Kontakts.

6. Trainingsverfahren nach einem der Ansprüche 1 bis 5, wobei im Schritt e) das Auswählen der Erklärbarkeitsmethode anhand von vier objektiven Kriterien: Faithfulness/Correctness, Completeness, Continuity und Compactness erfolgt.

7. Trainingsverfahren nach einem der Ansprüche 1 bis 6, wobei die Berechnung der Aufmerksamkeitskarte der Erklärbarkeitsmethode mittels Class Activation Mapping (CAM)erfolgt.

8. Trainingsverfahren nach Anspruch 7, wobei die Berechnung der Werte der Klassifikationskarte der Erklärbarkeitsmethode mittels einer CAM Methode ausgewählt auf der Gruppe von: Grad-CAM, Grad-CAM++, Layer-CAM, Score-CAM, Eigen-CAM oder Ablation-CAM erfolgt.

9. Computerimplementiertes Verfahren für die Schädigungserkennung in Bilddaten eines zu untersuchenden Körpers, umfassend die Schritte:
a) Generieren mindestens einer ersten makroskopischen Referenzaufnahme mittels einer ersten ortsfesten Bildaufnahmeeinrichtung und einer Mehrzahl von mikroskopischen Referenzaufnahmen mittels einer zweiten positionierbaren Bildaufnahmeeinrichtung mindestens einer zu untersuchenden Oberfläche des unbelasteten zu untersuchenden Körpers;
b) Aufprägen einer Last oder eines Lastregimes auf den Körper;
c) Generieren mindestens einer makroskopischen Aufnahme der mindestens einen zu untersuchenden Oberfläche des Körpers unter anliegender Last gemäß Verfahrensschritt b) und/oder nach Entlastung über die erste ortsfeste Bildaufnahmeeinrichtung;
d) Berechnen der aktuellen Lokalisierung mindestens eines Schädigungsbereiches und/oder mindestens eines Bereiches einer Rissspitze im Körper unter Verwendung eines trainierten neuronalen Netzwerkes für die Schädigungserkennung nach einem der vorausgehenden Ansprüche.
e) Ausrichten der zweiten positionierbaren Bildaufnahmeeinrichtung anhand des mindestens einen Schädigungsbereichs des Körpers und/oder des mindestens einen Bereichs einer Rissspitze im Körper gemäß Verfahrensschritt c) und Generieren mindestens einer mikroskopischen Aufnahme des mindestens einen Schädigungsbereichs mittels der zweiten Bildaufnahmeeinrichtung unter anliegender Last gemäß Verfahrensschritt b) und/oder nach Entlastung; und
f) Optionales Wiederholen der Verfahrensschritte b) bis e) um eine beliebige ganzzahlige Anzahl an Wiederholungen, wobei im Verfahrensschritt b) eine von der zuvor aufgeprägten Last abweichende Last oder ein abweichendes Lastregime aufgeprägt wird.

10. Verfahren nach Anspruch 9, wobei das Verfahren vor dem Verfahrensschritt b) weiterhin den Schritt umfasst:
a1) Kalibrieren der Positionierung der zweiten Bildaufnahmeeinrichtung durch Abgleichen der aktuellen Raumlage der zweiten Bildaufnahmeeinrichtung gegenüber der ersten ortsfesten Bildaufnahmeeinrichtung.

11. Verfahren nach Anspruch 9 oder 10, wobei im Verfahrensschritt a) makroskopische Referenzaufnahmen der gesamten Oberfläche des unbelasteten zu untersuchenden Körpers mittels einer ersten ortsfesten Bildaufnahmeeinrichtung und eine Mehrzahl von mikroskopischen Referenzaufnahmen der gesamten Oberfläche des unbelasteten zu untersuchenden Körpers mittels einer zweiten positionierbaren Bildaufnahmeeinrichtung generiert werden.

12. Verfahren nach einem der Ansprüche 9 bis 11, wobei das Verfahren in dem Schritt c) zusätzlich den Schritt umfasst:
e1) optisches Fokussieren der zweiten Bildaufnahmeeinrichtung auf dem Bereich der Schädigung bzw. der Rissspitze.

13. Verfahren nach einem der Ansprüche 9 bis 12, wobei es sich bei den Bilddaten der ersten und zweiten Bildaufnahmeeinrichtung um Bildkorrelation in zwei oder drei Dimensionen handelt.

14. Prüfsystem umfassend:
- eine Prüfmaschine zur Aufprägung einer definierten Last oder eines Lastregimes auf einen zu untersuchenden Körper;
- eine erste ortsfeste makroskopische Bildaufnahmeeinrichtung zur Generierung von makroskopischen Aufnahmen des zu untersuchenden Körpers;
- eine zweite ausrichtbare mikroskopische Bildaufnahmeeinrichtung zur Generierung mindestens einer mikroskopischen Aufnahme des zu untersuchenden Körpers; und
- ein Computersystem, das dazu ausgebildet ist, das Verfahren nach einem der vorausgehenden Ansprüche 9 bis 13 auszuführen.

15. Prüfsystem nach Anspruch 14, **dadurch gekennzeichnet, dass** die mikroskopische Bildaufnahmeeinrichtung ein Lichtmikroskop und eine daran optisch angeschlossene optische Aufnahmeeinrichtung, wie beispielsweise eine Industriekamera oder Spiegelreflexkamera, umfasst.

16. Prüfsystem nach Anspruch 14 oder 15, wobei es sich bei der ersten und/oder zweiten Bildaufnahmeeinrichtung jeweils um ein System zur digitalen Bildkorrelation in zwei oder drei Dimensionen handelt.

17. Computerprogrammprodukt, umfassend Befehle, die bei der Ausführung des Programms durch einen Computer diesen veranlassen, das Verfahren/die Schritte des Verfahrens nach einem der Ansprüche 1 bis 8 oder 9 bis 13 auszuführen.

18. Computerlesbares Speichermedium, umfassend Befehle, die bei der Ausführung durch einen Computer diesen veranlassen, das Verfahren/die Schritte des Verfahrens nach einem der Ansprüche 1 bis 8 oder 9 bis 13 auszuführen.

19. Verwendung des Verfahrens nach einem der Ansprüche 9 bis 13 zur Erkennung des Rissfortschrittes bzw. der Schädigung in einem Bauteil.
